# EUROPEAN PATENT APPLICATION

(11) **EP 1 928 153 A1**
(43) Date of publication of application: **04.06.2008**
(21) Application number: 07021528.0
(22) Date of filing: 06.11.2007
(51) Int. Cl.: H04L 29/08, G06F 17/30

(54) **Mobile terminal supporting internet access and data processing method for the same**

(30) Priority: 28.11.2006 KR 20060118201
(71) Applicant: Samsung Electronics Co., Ltd, Yeongtong-gu Suwon-si, Gyeonggi-do (KR)
(72) Inventor: Kim, Soon Ok c/o Samsung Electronics Co., Ltd, Suwon-si Gyeonggi-do (KR); Choi, Do Hwan c/o Samsung Electronics Co., Ltd, Suwon-si Gyeonggi-do (KR); An, Jong Hyun c/o Samsung Electronics Co., Ltd, Suwon-si Gyeonggi-do (KR)
(74) Representative: Boakes, Jason Carrington

(57) **Abstract**

Provided are a mobile terminal (10) supporting Internet access and a data processing method for the same. The data processing method includes connecting to a Web server on the Internet, and displaying a search box; transmitting a search word entered in the search box to the Web server; receiving, in reply to the search word, search result data from the Web server; extracting a communication-related string including a phone number or an electronic mail address from the search result data; and displaying the extracted communication-related string.

## Description

### BACKGROUND OF THE INVENTION

### 1. Field of the Invention

The present invention relates generally to a mobile terminal and, more particularly, to a mobile terminal supporting Internet access and a data processing method for the same.

### 2. Description of the Related Art

Advances in communication technologies have enabled popularization of mobile terminals. In addition to conventional call processing, advanced mobile terminals support data communication and store various application programs for other supplementary functions.

Mobile terminals utilizing portable or wireless Internet technology can connect to external Web servers and receive digital content therefrom. Such mobile terminals enable users to conveniently receive Internet services. For example, when a user activates a Web browser in a mobile terminal and enters a search word into the Web browser, the mobile terminal receives search result data from a corresponding server in reply to the search word and displays the search result data on a screen.

However, a conventional mobile terminal simply displays the entire search result data and does not provide an information extraction function that extracts and displays only necessary information from the search result data according to conditions preset by the user. For example, when the user desires to find communication-related strings such as telephone numbers, electronic mail addresses, fax numbers and homepage addresses, the user may have to check the entire search result data obtained from a Web server. Further, to find and store desired communication-related strings for later use, the user may have to enter multiple keys and perform tedious actions.

### SUMMARY OF THE INVENTION

The present invention has been made in view of the above problems, and the present invention provides a mobile terminal supporting Internet access and a data processing method for the same, wherein a communication-related string in Internet search result data is extracted and stored for later use or used to perform a subsequent communication operation.

In accordance with the present invention, there is provided a data processing method for a mobile terminal supporting Internet access, including connecting to a Web server on the Internet, and displaying a search box; transmitting a search word entered in the search box to the Web server; receiving, in reply to the search word, search result data from the Web server; extracting a communication-related string including a phone number and an electronic mail address from the search result data; and displaying the extracted communication-related string.

In accordance with the present invention, there is also provided a mobile terminal supporting Internet access, including a radio frequency unit for connecting to an external Web server on the Internet; a display unit for displaying communication-related strings, including a phone number and an electronic mail address, that are extracted from search result data from the Web server; a key input unit for generating a key signal to select at least one of the communication-related strings; a memory unit for storing extracted communication-related strings; and a control unit for extracting a communication-related string, and for storing the extracted communication-related string or performing a communication operation using the extracted communication-related string, according to a key signal from the key input unit.

### BRIEF DESCRIPTION OF THE DRAWINGS

The above and other objects, features and advantages of the present invention will be more apparent from the following detailed description in conjunction with the accompanying drawings, in which:
FIG. 1 illustrates a configuration of a mobile terminal according to the present invention;
FIG. 2 illustrates a control unit of the mobile terminal of FIG. 1;
FIG. 3 is screen representations illustrating an operation of the mobile terminal of FIG. 1;
FIG. 4 is a screen representation illustrating another operation of the mobile terminal of FIG. 1;
FIG. 5 is a flow chart illustrating a data processing method according to the present invention;
FIG. 6 is a flow chart illustrating a procedure to process a selected communication-related string in the method of FIG. 5;
FIG. 7 is a flow chart illustrating a step of key signal identification in the procedure of FIG. 6; and
FIGS. 8A to 8C are screen representations illustrating the data processing method of FIG. 5.

### DETAILED DESCRIPTION OF EXEMPLARY EMBODIMENTS

Hereinafter, exemplary embodiments of the present invention are described in detail with reference to the accompanying drawings. The same reference symbols identify the same or corresponding elements in the drawings. Detailed descriptions of constructions or processes known in the art may be omitted to avoid obscuring the invention in unnecessary detail. Particular terms may be defined to describe the invention in the best manner. Accordingly, the meaning of specific terms or words used in the specification and the claims should not be limited to the literal or commonly employed sense, but should be construed in accordance with the spirit of the invention. The description of the various embodiments is to be construed as exemplary only and does not describe every possible instance of the invention. Therefore, it should be understood that various changes may be made and equivalents may be substituted for elements of the invention.

In the description, communication-related strings as communication information includes a telephone number, cellular phone number, fax number, electronic mail address, and homepage address. Communication-related strings may also include any character string having a preset format, and an extended or modified version of the character string.

Portable Internet or wireless Internet is related to an Internet access feature of a mobile terminal of the present invention.

The mobile terminal of the present invention is a terminal that supports Internet access and has a memory unit for storing information obtained through the Internet and a control unit for controlling communication operations. The mobile terminal may be any information and communication appliance or multimedia appliance, such as a mobile communication terminal, a digital broadcast receiving terminal, a Personal Digital Assistant (PDA), a smart phone, an International Mobile Telecommunications 2000 (IMT 2000) terminal, a Wideband Code Division Multiple Access (WCDMA) terminal, a Universal Mobile Telecommunications System (UMTS) terminal, or a Wireless Broadband Internet (WiBro) terminal.

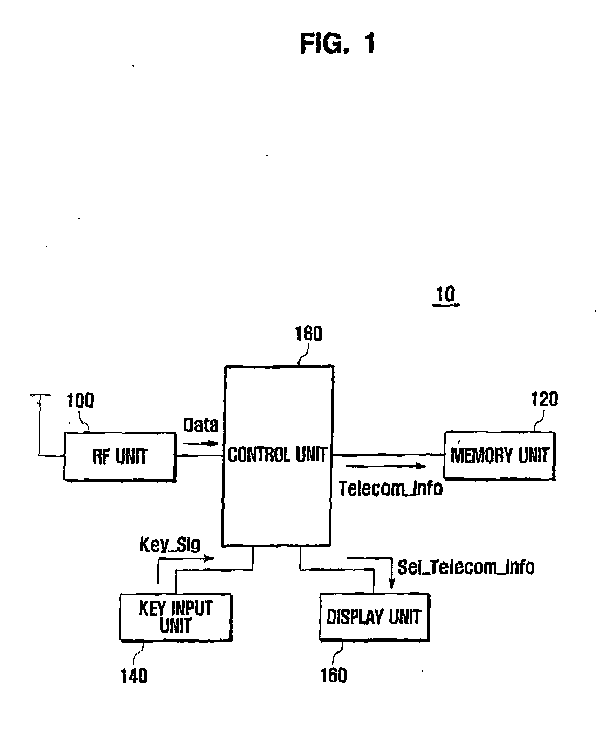

FIG. 1 illustrates a configuration of a mobile terminal 10 according to the present invention.

Referring to FIG. 1, the mobile terminal 10 includes a Radio Frequency (RF) unit 100, a memory unit 120, a key input unit 140, a display unit 160, and a control unit 180.

The RF unit 100 performs communication operations, such as establishment of a communication channel to a serving base station for voice communication, wireless transmission of user data to another mobile terminal, and transmission and reception of digital content and associated control signals to and from an external Web server. The RF unit 100 includes an RF transmitter for upconverting the frequency of a signal to be transmitted and amplifying the signal, and an RF receiver for low-noise amplifying a received signal and downconverting the frequency of the signal.

The memory unit 120 stores application programs related to the present invention, and digital content and communication-related strings received from external Web server. The memory unit 120 may include a program memory section and a data memory section.

The program memory section stores an operating system for booting the mobile terminal 10, application programs for playing multimedia content, application programs for supplementary functions related to photography and playing of audio and video data. When one of these functions is activated in response to a user request, the mobile terminal 10 executes a corresponding application program under the control of the control unit 180.

The data memory section stores user data generated from operation of the mobile terminal 10, such as digital content received from an external Web server and communication-related strings extracted from received data. The data memory section may also provide buffer areas for a communication function in use or for an activated Web browser.

The key input unit 140 includes a plurality of alphanumeric and function keys for inputting alphanumeric information and setting various functions. The function keys may include direction, side, and shortcut keys associated with particular functions. The key input unit 140 sends a key signal, input by the user for setting and controlling operations of the mobile terminal 10, to the control unit 180.

In particular, the key input unit 140 generates a key signal for storing communication-related strings (Telecom_Info) obtained using a Web browser. That is, the key input unit 140 generates a key signal to select and store at least one of communication-related strings (Telecom_Info) displayed through the display unit 160, or a key signal to perform a communication function applicable to the selected communication-related string.

The display unit 160 displays various menus of the mobile terminal 10, information input by the user, and information to be provided to the user. The display unit 160 may include a panel of Liquid Crystal Display (LCD) devices. If the panel has a touch screen capability, the display unit 160 can also act as an input means. For example, when communication-related strings (Telecom_Info) are displayed on the display unit 160 having a touch screen capability, the user can issue a command, through a pointer and a finger, to store one of the displayed communication-related strings or to perform a communication function using a selected communication-related string. The display unit 160 displays a menu for storing selected communication-related strings.

The control unit 180 controls the overall operation and signal exchange between internal components of the mobile terminal 10. In particular, the control unit 180 controls operations related to storage of communication-related strings (Telecom_Info). The control unit 180 extracts communication-related strings from content data received from an external Web server, displays the extracted communication-related strings on the display unit 160, and activates a menu corresponding to a key signal from the key input unit 140.

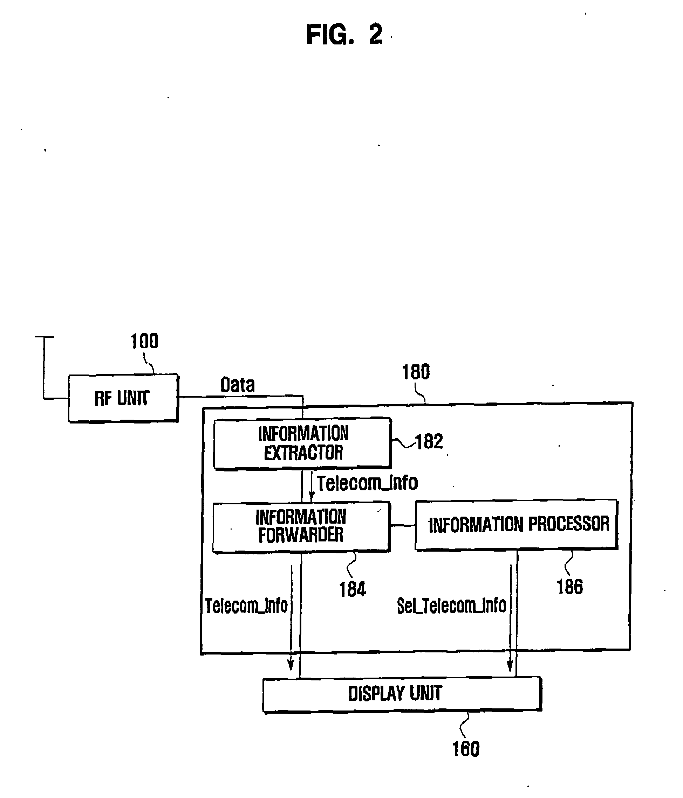

Thereto, as illustrated in FIG. 2, the control unit 180 includes an information extractor 182 for extracting communication-related strings (Telecom_Info) from content data (Data) received from an external Web server, an information forwarder 184 for forwarding extracted communication-related strings to the display unit 160, and an information processor 186 for storing extracted communication-related strings and associating communication-related strings with applicable communication operations.

The information extractor 182 extracts character strings having preset formats as communication-related strings (Telecom_Info) from search result data (Data) that is received from an external Web server in reply to a particular search word input to a Web browser. For example, a communication-related string can be a telephone number, a mobile phone number, a fax number, an electronic mail address, or a homepage address, which is composed of a fixed number of numeric digits or of a character string having a preset format. A phone number or a fax number is composed of a fixed number of numeric digits such as 602-111-1111. An electronic mail address has a form of user-id@Host.Domain. A homepage address has a form identical to that of a Uniform Resource Locator (URL). The information extractor 182 extracts such a communication-related string (Telecom_Info) from search result data (Data), and sends the extracted communication-related string to the information forwarder 184.

The information forwarder 184 forwards an extracted communication-related string to the display unit 160, which then displays the communication-related string to enable the user to select and store one of displayed communication-related strings or to associate a selected communication-related string with a communication operation to be performed.

The information processor 186 activates operations necessary for selecting and storing at least one of communication-related strings displayed on the display unit 160 or for associating a selected communication-related string with a communication operation. When the user enters a preset function key in a state where communication-related strings are displayed on the display unit 160, the key input unit 140 sends a corresponding key signal (Key_Sig) to the information processor 186, which then performs an operation corresponding to the key signal using the displayed communication-related strings, For example, if the user enters a call request (Send) key in a state where communication-related strings are displayed on the display unit 160, the information processor 186 extracts and displays only phone numbers from the displayed communication-related strings. If multiple phone numbers are present, the information processor 186 displays a window for phone number selection. When the user selects a. phone number, the information processor 186 sends the selected phone number to the RF unit 100 for placement of a call. In addition, if the user enters a message request key, the information processor 186 extracts and displays only a mobile phone number from the displayed communication-related strings. If multiple mobile phone numbers are present, the information processor 186 displays a window for mobile phone number selection. When the user selects a mobile phone number, the information processor 186 activates a message window for composing and sending a message using the selected mobile phone number. Further, if the user enters a phonebook key, the information processor 186 activates a phonebook window for storing a selected phone number from the displayed communication-related strings in a phonebook. Further, if the user enters an Internet access key, the information processor 186 activates the RF unit 100 for accessing the Internet using a selected homepage address or a URL.

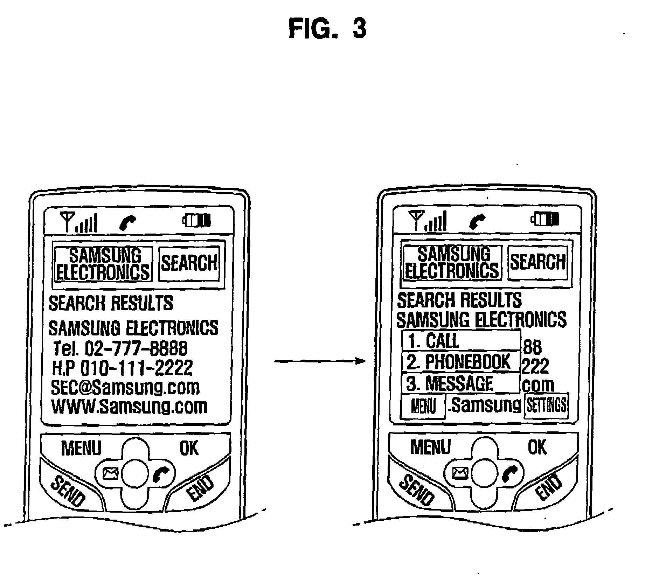

As illustrated in FIG. 3, when the user enters a function key mapped to an on-screen menu key, the information processor 186 displays a corresponding menu having menu items, and receives a key signal (Key_Sig) corresponding to a function key mapped to a selected menu item. If the display unit 160 has a touch screen capability, the user can activate a desired menu using a stylus or a finger. In the menu, the user can select a menu item to execute a function associated with the selected menu item.

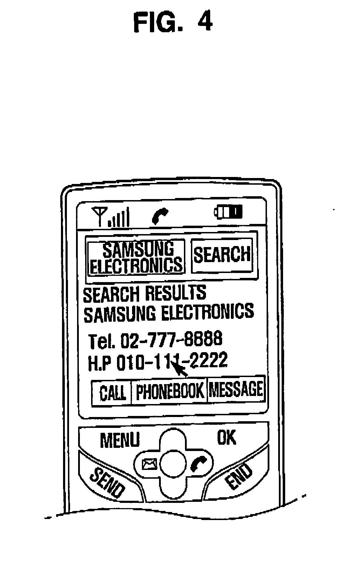

As illustrated in FIG. 4, when the user selects a displayed communication-related string by moving the pointer thereto through direction keys, the information processor 186 displays a pop-up menu having menu items associated with functions applicable to the selected communication-related string, such as saving of the selected communication-related string or performance of a communication operation using the selected communication-related string. If the display unit 160 has a touch screen capability, the user can activate, by selecting a communication-related string with a stylus or a finger, a menu associated with the selected communication-related string.

In addition, the mobile terminal 10 of the present invention may further include at least one of a camera module and a digital broadcast receiving module.

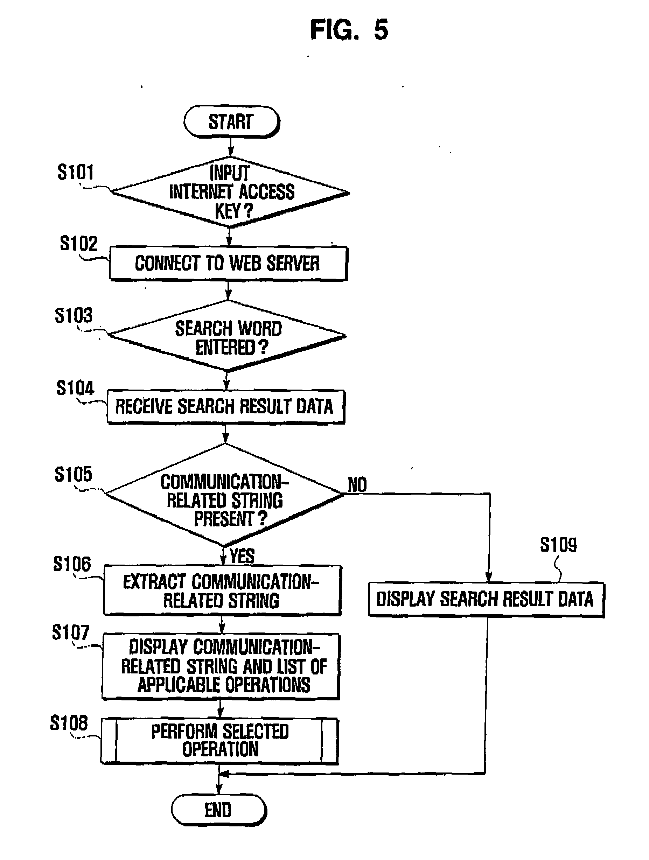

FIG. 5 is a flow chart illustrating a data processing method according to another exemplary embodiment of the present invention.

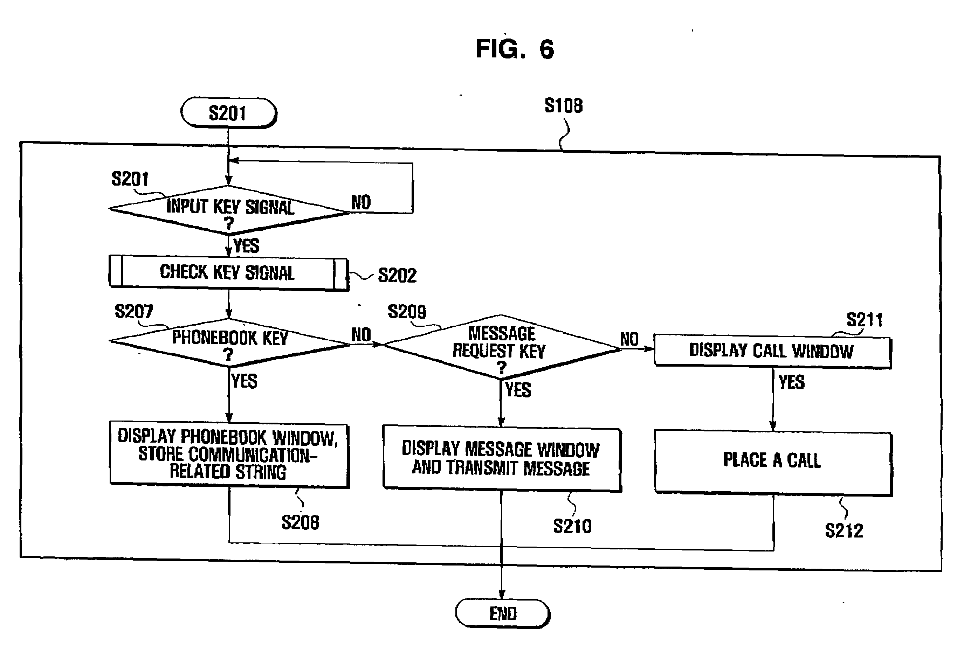

Referring to FIG. 5, when the user enters an Internet access key for reception of Internet contents, in Step S101, the control unit 180 of the mobile terminal 10 connects to an external Web server on the Internet, in Step S102. When the user inputs a search word, in Step S103, the control unit 180 sends the search word to the Web server, and then receives search result data from the Web server in reply to the search word, in Step S104. The control unit 180 determines whether a communication-related string is present in the search result data, in Step S105. If a communication-related string is present in the search result data, the control unit 180 extracts the communication-related string from the search result data, in Step S106. The control unit 180 displays the extracted communication-related string together with a list of operations applicable to the communication-related string, in Step S107. When the user selects an operation (for example, placement of a call, transmission of a message, and saving of the communication-related string), the control unit 180 performs the selected operation, in Step S108. Step S108 is further described in connection with FIG. 6.

If a communication-related string is not present in the search result data at Step S105, the control unit 180 displays the received search result data without additional processing, in Step S109.

FIG. 6 is a flow chart illustrating a procedure to process a selected communication-related string in the method of FIG. 5.

Referring to FIG. 6, when a key signal (Key_Sig) is input, in Step S201, the control unit 180 checks the input key signal, in Step S202. Here, a key signal may be generated by a preset function key of the key input unit 140, by a function key mapped to an on-screen menu key on the display unit 160, or by selection with the pointer.

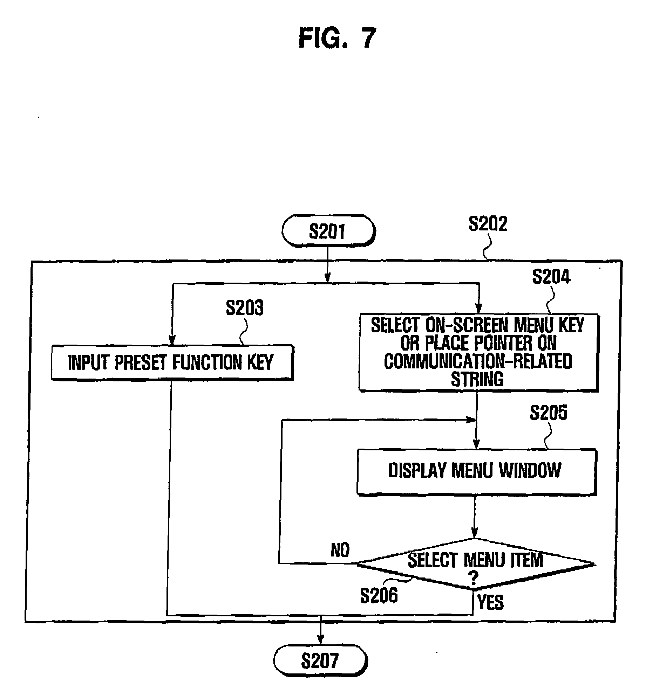

As illustrated in FIG. 7, when the key input unit 140 detects input of a preset function key such as a call request (Send) key, message request key, phonebook key or menu key, it sends a corresponding key signal (Key_Sig) to the control unit 180.

Alternatively, when a function key mapped to the on-screen menu key on the display unit 160 is input or a communication-related string in display is pointed by the pointer, in Step S204, the control unit 180 displays a menu window, in Step S205. When a menu item of the menu window is selected, in Step S206, the corresponding selection signal is sent to the control unit 180.

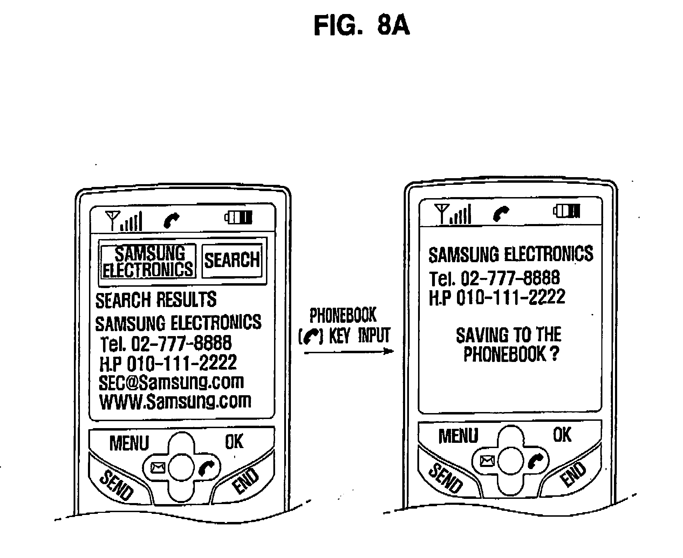

Referring back to FIG. 6, if the input key signal is related to the phonebook key, in Step S207, the control unit 180 displays a phonebook menu window, as illustrated in FIG. 8A, and stores a displayed phone number such as a telephone number, mobile phone number or fax number, in Step S208. If multiple phone numbers are present, the control unit 180 may further display a pop-up window for selecting one or more phone numbers to be stored, A memo can be added when a phone number is stored in the phonebook.

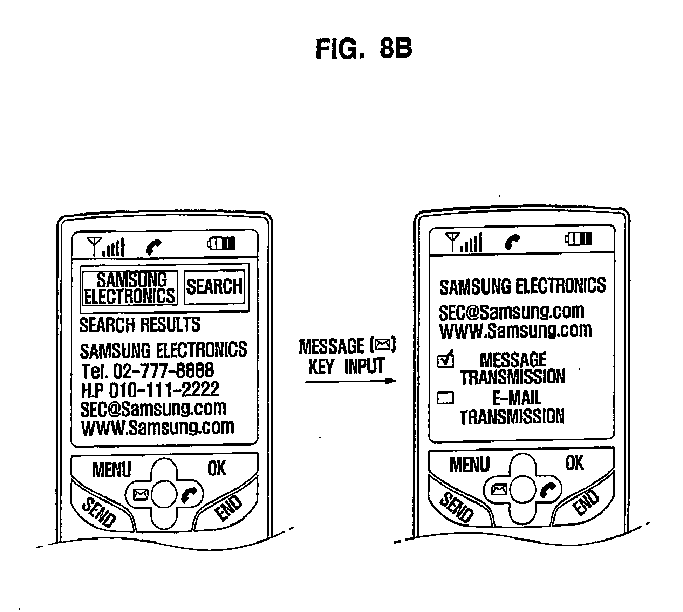

If the input key signal is related to the message request key, in Step S209, the control unit 180 displays a message edit window, as illustrated in FIG. 8B, and transmits a composed message using a displayed phone number, in Step S210, If multiple phone numbers are present, the control unit 180 may further display a pop-up window for selecting a phone number to be used. If an electronic mail address in display is present, the user can transmit an electronic mail using the electronic mail address.

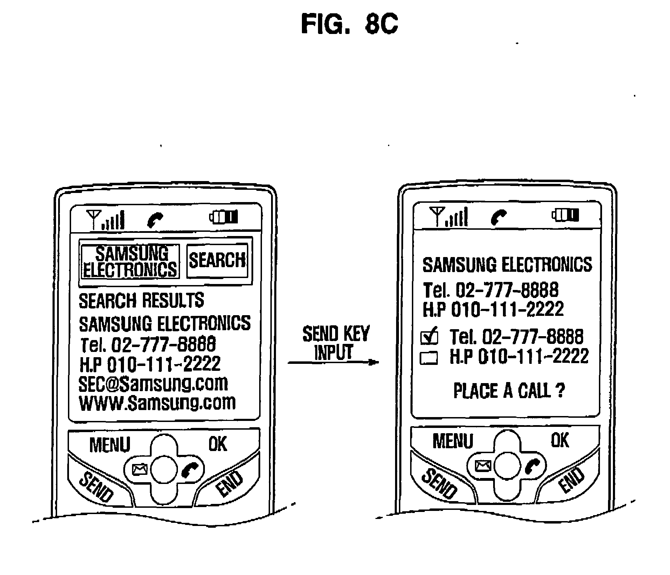

lf the input key signal is related to the call request key, the control unit 180 displays a call window as illustrated in FIG. 8C, in Step S211, and places a call using a displayed phone number, in Step S212. If multiple phone numbers are present, the control unit 180 may further display a pop-up window for selecting a phone number to be used.

Further, in Step S202 after key signal checking, the control unit 180 can display a pop-up window for selecting an Internet connection mode or an Internet disconnection mode. In the Internet connection mode, the control unit 180 temporarily saves the state of the Web browser in the memory unit 120, then performs the operation corresponding to the input key signal, and restores the state of the Web browser after completion of the operation. In the Internet disconnection mode, the control unit 180 disconnects the connection to the Web server, then performs the operation corresponding to the input key signal, and changes mode to an idle mode after completion of the operation.

As apparent from the above description, the present invention provides a mobile terminal supporting Internet access and data processing method for the same, wherein communication-related strings in Internet search result data are extracted and stored for later use or used to perform subsequent communication operations.

While exemplary embodiments of the present invention have been shown and described in this specification, it will be understood by those skilled in the art that various changes or modifications of the embodiments are possible without departing from the spirit and scope of the invention as defined by the appended claims.

## Claims

1. A data processing method for a mobile terminal supporting Internet access, comprising:
connecting to a Web server on the Internet, and displaying a search box;
transmitting a search word entered in the search box to the Web server;
receiving, in reply to the search word, search result data from the Web server;
extracting a communication-related string including a phone number and an electronic mail address from the search result data; and
displaying the extracted communication-related string.

2. The data processing method of claim 1, further comprising storing the extracted communication-related string.

3. The data processing method of Claim 1, further comprising performing a communication operation using the extracted communication-related string.

4. The data processing method of claim 3, wherein the communication operation is one of placement of a call, transmission of a message, and saving to a phonebook.

5. The data processing method of claim 2, wherein the storing is performed in response to one of input of a preset function key, input of a function key mapped to an on-screen menu key, and selection of the communication-related string using a pointer.

6. The data processing method of claim 3, wherein the communication operation is performed in response to one of input of a preset function key, input of a function key mapped to an on-screen menu key, and selection of the communication-related string using a pointer.

7. The data processing method of claim 2, further comprising, if multiple communication-related strings are present in the search result data, selecting at least one of the communication-related strings.

8. The data processing method of claim 2, further comprising selecting one of an Internet connection mode and an Internet disconnection mode, wherein the storing is performed in a state where the Internet connection is maintained in the Internet connection mode and is disconnected in the Internet disconnection mode.

9. The data processing method of claim 3, further comprising selecting one of an Internet connection mode and an Internet disconnection mode, wherein the communication operation is performed in a state where the Internet connection is maintained in the Internet connection mode and is disconnected in the Internet disconnection mode.

10. The data processing method of claim 1, wherein the communication-related string further includes a mobile phone number, a fax number, and a homepage address.

11. The data processing method of claim 1, wherein the extracting a communication-related string comprises extracting a character string having a fixed format from the search result data, wherein the character string is composed of at least one of numeric digits, characters, symbols, and a combination thereof.

12. A mobile terminal supporting Internet access, comprising:
a radio frequency unit for connecting to an external Web server on the Internet;
a display unit for displaying communication-related strings including a phone number and an electronic mail address extracted from search result data from the Web server;
a key input unit for generating a key signal to select at least one of the communication-related strings;
a memory unit for storing extracted communication-related strings; and
a control unit for extracting a communication-related string, and for storing the extracted communication-related string or performing a according to a key signal from the key input unit.

13. The mobile terminal of claim 12, wherein the control unit extracts a communication related string, and performs a communication operation using the extracted communication-related string, according to a key signal from the key input unit.

14. The mobile terminal of claim 12, wherein the communication-related string further includes a mobile phone number, a fax number, and a homepage address.

15. The mobile terminal of claim 13 wherein the control unit performs one of placement of a call, transmission of a message, and saving to a phonebook, as the communication operation.

16. The mobile terminal of claim 12, wherein the control unit extracts a character string having a fixed format from the search result data, wherein the character string is composed of at least one of numeric digits, characters, symbols, and a combination thereof.

17. The mobile terminal of claim 12 wherein the key signal is associated with one of input of a preset function key, input of a function key mapped to an on-screen menu key, and selection of the communication-related string using a pointer.

18. The mobile terminal of claim 12, wherein the display unit has a touch screen capability.
